# EUROPEAN PATENT APPLICATION

(11) **EP 4 835 438 A1**
(43) Date of publication of application: **04.11.2026**
(21) Application number: 25866555.3
(22) Date of filing: 12.09.2025
(51) Int. Cl.: G01N 15/02, G06F 17/10, H01M 4/36, H01M 4/525, H01M 4/505, H01M 4/02

(54) **POSITIVE ELECTRODE ACTIVE MATERIAL, AND POSITIVE ELECTRODE AND LITHIUM SECONDARY BATTERY COMPRISING SAME**

(30) Priority: 13.09.2024 KR 20240126153
(71) Applicant: LG Energy Solution, Ltd., Seoul 07335 (KR)
(72) Inventor: LEE, Jeayoung, Daejeon 34122 (KR); HAN, Gi Beom, Daejeon 34122 (KR); LEE, Youshin, Daejeon 34122 (KR); KIM, Minjeong, Daejeon 34122 (KR); PARK, Hyunyoung, Daejeon 34122 (KR); PARK, Sin Young, Daejeon 34122 (KR); LIM, Hyungwoo, Daejeon 34122 (KR); JEONG, Yeaji, Daejeon 34122 (KR)
(74) Representative: Hoffmann Eitle
(86) International application number: PCT/KR2025/014266
(87) International publication number: WO 2026/059383

(57) **Abstract**

The present disclosure relates to a bimodal positive electrode active material composed of a mixture of a large particle and a small particle, wherein the large particle is a lithium- and manganese-rich oxide in which a molar ratio of lithium to all transition metals excluding lithium is more than 1 and a molar content of manganese in the transition metals is 50 mol% or more, and wherein a roundness of the large particle is 0.8 or more, and a positive electrode and a lithium secondary battery comprising the same.

## Description

### TECHNICAL FIELD

### Cross Citation with Related Application(s)

This application claims priority to and the benefit of Korean Patent Application No. 10-2024-0126153, filed on September 13, 2024, and Korean Patent Application No. 10-2025-0130705, filed on September 12, 2025, the disclosures of which are incorporated herein by reference in their entirety.

The present disclosure relates to a positive electrode active material, a positive electrode and a lithium secondary battery comprising the same.

### BACKGROUND

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibits high charging/discharging characteristics, has a long cycle life, and is eco-friendly, and has been commercialized and widely used.

The lithium secondary battery generally consists of a positive electrode, a negative electrode, a separator and an electrolyte. The positive electrode and the negative electrode include active materials capable of intercalation and deintercalation of lithium ions.

As a positive electrode active material for lithium secondary batteries, lithium cobalt oxide (LiCoO₂), lithium nickel oxide (LiNiO₂), lithium manganese oxide (LiMnO₂ or LiMnO₄, etc.), lithium iron phosphate compound (LiFePO₄), and the like have been used. Among these, lithium cobalt oxide has the advantage of high operating voltage and excellent capacity characteristics, but the price of cobalt, which is a raw material, is high and its supply is unstable, which makes it difficult to apply it commercially to large-capacity batteries. Lithium nickel oxide has poor structural stability, which makes it difficult to achieve sufficient life characteristics. On the other hand, spinel-structured lithium manganese oxides have excellent stability, but has the problem that capacity characteristics deteriorate. Thus, lithium composite transition metal oxides containing two or more types of transition metals have been developed and used in order to compensate for the problems of lithium transition metal oxides containing Ni, Co, or Mn alone. Among these, as it has become known that oxides containing excessive lithium and having a higher Mn content than that of other metals except lithium (hereinafter referred to as "lithium- and manganese-rich oxide") can secure high energy density as high-capacity active materials, research and interest in this field are increasing significantly.

However, conventional lithium- and manganese-rich oxides have low densities and thus, a pressing process was performed under a high press load to achieve the target electrode density. During this process, cracking of the active material particles occurs, leading to a decrease in battery life. Therefore, there is a need to develop a positive electrode active material that can reduce the press load to prevent the cracking of the active material particles, and improve battery life.

### DETAILED DESCRIPTION OF THE INVENTION

### Technical Problem

It is an object of the present disclosure to provide a positive electrode active material that can ensure excellent pressing density while suppressing the cracking of particles in a battery manufacturing process.

It is another object of the present disclosure to provide a positive electrode and a lithium secondary battery, comprising the positive electrode active material and thus improved in life characteristics.

### Technical Solution

According to an aspect of the present disclosure, provided is a bimodal positive electrode active material composed of a mixture of a large particle and a small particle, wherein the large particle is a lithium- and manganese-rich oxide in which a molar ratio of lithium to all transition metals excluding lithium is more than 1 and a molar content of manganese in the transition metals is 50 mol% or more, and wherein a roundness of the large particle is 0.8 or more.

According to another aspect of the present disclosure, provided is a positive electrode comprising the positive electrode active material.

According to yet another aspect of the present disclosure, provided is a lithium secondary battery comprising the positive electrode; a negative electrode facing the positive electrode; and a separator or an electrolyte layer interposed between the positive electrode and the negative electrode.

### Advantageous Effects

The present disclosure relates to a positive electrode active material for a lithium secondary battery, which is a bimodal type positive electrode active material comprising a mixture of a large particle and a small particle, wherein a lithium manganese-rich oxide exhibiting a roundness of 0.8 or more is mixed as the large particle, which enables the press load required to achieve the target electrode density to be reduced, thereby suppressing the cracking of the active material particles and improving the life characteristics of the lithium secondary battery.

### BRIEF DESCRIPTION OF THE DRAWINGS

Figure 1 shows photographs of Samples 1~6, which are large particle powder groups, taken with a scanning electron microscope.
Figure 2 shows photographs of Samples a~e, which are small particle powder groups, taken with a scanning electron microscope.
Figure 3 shows volume cumulative particle size distribution curves for the positive electrode active materials of Examples 2 to 4.
Figure 4 shows the results of evaluating the life characteristics of lithium secondary batteries manufactured from the positive electrode active materials of Examples 1 to 5 and Comparative Example 1.

### DETAILED DESCRIPTION OF THE EMBODIMENTS

Hereinafter, specific embodiments of the present disclosure will be described in more detail for promoting an understanding of the invention.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

As used herein, the term "lithium- and manganese-rich oxide" may refer to a lithium metal oxide which includes a layered crystal structure and in which a molar ratio of lithium based on the number of moles of all transition metals excluding lithium is more than 1 and the content of manganese in all transition metals excluding lithium is 50 mol% or more, specifically, 50 mol% or more and less than 100 mol%.

The terminology used herein is merely used for the purpose of describing particular embodiments, and is not intended to be limiting of the present disclosure. The singular forms are intended to include the plural forms as well, unless the context clearly indicates otherwise.

It should be understood that the terms "comprises," "comprising," "includes," "including," "has," or "having," when used herein, specify the presence of stated features, integers, steps, components or combinations thereof, but do not preclude the presence or addition of one or more other features, integers, steps, components or combinations thereof.

As used herein, the term "primary particle" refers to a particle unit having no grain boundary in appearance when observed in the view at a magnification of 5,000 to 20,000 using a scanning electron microscope(SEM), and the term "secondary particle" refers to a particle formed by aggregation of several tens to several hundreds of primary particles. More specifically, a secondary particle is an aggregate of 40 primary particles or more.

As used herein, the term "particle" may include any one or all of a single particle, a pseudo-single particle, a primary particle, a nodule, and a secondary particle.

In the present disclosure, the "average particle diameter of the primary particle" may be calculated by magnify the sample surface by 50,000 times to measure the particle diameter of the primary particle using a scanning electron microscope (e.g., JEOL JSM-7200F), and then calculating the arithmetic mean of the measured particle diameter data.

In the present disclosure, the "particle diameter (Dₙ) of the secondary particle" refers to a particle diameter corresponding to n% of cumulative volume in a volume cumulative particle size distribution of a powder to be measured. That is, D₅₀ refers to a particle diameter corresponding to 50% of cumulative volume in a volume cumulative particle size distribution, D₉₀ refers to a particle diameter corresponding to 90% of cumulative volume in a volume cumulative particle size distribution, and D₁₀ refers to a particle diameter corresponding to 10% of cumulative volume in a volume cumulative particle size distribution. The Dₙ may be measured by using a laser diffraction method. Specifically, D₁₀, D₅₀ and D₉₀ can be measured by a process which includes dispersing a powder to be measured in a dispersion medium, introducing it into a commercially available laser diffraction particle size measurement device (e.g., Malvern Mastersizer 3000), irradiating it with an ultrasonic wave of about 28 kHz with the output power of 60W to obtain a volume cumulative particle size distribution graph, and determining the particle diameter corresponding to 10%, 50% and 90% of cumulative volume.

In the present disclosure, the "porosity (%)" of the positive electrode active material refers to the percentage of pore volume within the active material powder group relative to the total volume of the active material powder group, and may be obtained by calculating the value of {(true density - actual density) / true density} × 100 of the active material powder group. For example, after an oxide powder with a true density of 4.4 g/cc is placed in a cylindrical mold, the volume (0.974 cm³) is calculated using the bottom surface width of the cylindrical mold and the height of the filled powder, and the density (actual density, about 3.08 g/cc) is then calculated using the volume and mass (3g) of the powder. By substituting the actual density obtained from the above calculation and true density into the following Equation, it can be confirmed that the porosity is 30%. $Porosity \left(%\right) = \left\{\left(True Density-Actual Density\right)/True Density\right\} \times 100$

In this case, the true density refers to the density when the particles are completely filled with particles, excluding the gaps between particles, and the actual density refers to the density of the active material powder group to be measured. The term "target density" used in the press load measurement process described below has the same meaning as the "actual density" defined above.

In addition, in the present disclosure, the "porosity" of the electrode may be measured by analyzing photographs of a cross-section of an electrode specimen taken at a magnification of 1,000 to 2,000 times using a scanning electron microscope (for example, JEOL JSM-7200F).

Below, specific embodiments of the present disclosure will be described in detail.

Since lithium- and manganese-rich oxide has a lower density than other types of positive electrode active materials, a high press load is required to achieve the target electrode density. However, when pressing is performed under high press load, the active material particles crack and fine particles occur, which causes a problem that the battery life is reduced when applied to a battery.

Thus, the present inventors have continuously studied the relationship between press load and the electrode density under various conditions, such as mixing large particles and small particles, in order to find out a method for achieving the target electrode density while reducing the press load in an electrode fabrication process, and as a result, have completed the present disclosure.

The positive electrode active material of the present disclosure is a bimodal positive electrode active material composed of a mixture of a large particle and a small particle, wherein the large particle is a lithium- and manganese-rich oxide in which a molar ratio of lithium to all transition metals excluding lithium is more than 1 and a molar content of manganese in the transition metals is 50 mol% or more, and wherein a roundness of the large particle is 0.8 or more.

The bimodal positive electrode active material refers to a mixture that exhibits a normal distribution with two peaks in the particle size distribution, and the positive electrode active material of the present disclosure has a bimodal morphology in which a large particle and small particle are mixed. In a bimodal positive electrode active material, the large particle supports the structure of the active material layer, and the small particle fills the gap between the large particles and reduces porosity. Consequently, it is possible to achieve the target electrode density even under low press load.

In another embodiment, the small particle may be a lithium- and manganese-rich oxide. When the lithium- and manganese-rich oxide is mixed as a small particle in the positive electrode active material of the present disclosure, it may exhibit an effect of compensating for low true density compared to cases where cathode active materials such as lithium nickel-cobalt-manganese oxide (NCM) and lithium nickel-cobalt-aluminum oxide (NCA) are mixed. According to an embodiment, when the small particle is a lithium- and manganese-rich oxide, the positive electrode active material of the present disclosure may have the true density range described below.

In the present disclosure, the roundness (r) refers to a value obtained according to the following Equation 1, and may be a value calculated with a particle parameter of 300 to 400 in an Image Analysis Management (IAM) analysis. [Equation 1] $Roundness = \left(4\times Area\right) / \left(π\times {{D}_{max}}^{2}\right)$ wherein in Equation 1,
Area refers to the area of the particle, and
Dₘₐₓ refers to the major axis length of the particle.

The area of the particle and the major axis length of the particle may be obtained using photographs taken with a scanning electron microscope. Specifically, after a positive electrode active material powder group is uniformly applied onto a substrate such as carbon tape, the positive electrode active material particles are photographed using a scanning electron microscope (e.g., JSM-7200F (JEOL)), and the area of the particle and the major axis length of the particle are calculated through IAM analysis. In this case, the area of the particle refers to the area of a planar particle seen in the photograph, and the major axis length of the particle refers to the length of the longest axis of the particle seen in the photograph.

In an embodiment of the present disclosure, the roundness of the large particle may be 0.8 or more, specifically 0.8 or more and 1.0 or less, and more specifically 0.8 or more and 0.9 or more. When the roundness of the large particle satisfies the above range, the press load in the electrode pressing process may be reduced, thereby minimizing the cracking of the active material particles. Thereby, it is possible to manufacture secondary batteries having excellent life performance. Lithium- and manganese-rich oxides containing excessive lithium and manganese have had difficulties in adjusting the roundness due to the increased fine pores and surface irregularities resulting from the layered crystal structure. However, by appropriately adjusting the ammonia concentration, stirring speed, pH level, temperature, and additives in the manufacturing process, it is possible to adjust the roundness of lithium- and manganese-rich oxides. Specifically, when the concentration of ammonia (NH₃) is enhanced in the coprecipitation process, it is possible to promote aggregation between primary particles to form uniform aggregates and increase the roundness of secondary particles. Further, when the stirring speed is appropriately increased, it is possible to promote uniform collisions and aggregation during secondary particle formation and increase the roundness. Further, when the pH is lowered or appropriate additives are added, it is possible to suppress grain boundary growth and increase the roundness of the secondary particles.

In an embodiment, the large particle may be included in an amount of more than 50% by weight, specifically 60% by weight to 90% by weight, or more specifically 60% by weight to 70% by weight, based on the total weight of the positive electrode active material. As the content of the large particle in the positive electrode active material exceeds 50% by weight, the amount of fine particles generated due to particle cracking during the pressing process may be reduced, and the structure of the active material layer may be stably supported. In addition, the density obtained by pressing can be effectively increased.

In yet another embodiment, the small particle may be included in an amount of less than 50% by weight, specifically 10% by weight to 40% by weight, or more specifically 30% by weight to 40% by weight, based on the total weight of the positive electrode active material. When the small particle in the positive electrode active material are included within this range, the small particles fill the gap between large particles to reduce porosity and ultimately increase the density of the electrode.

In an embodiment of the present disclosure, the small particles and large particles may each be secondary particles formed by aggregation of a plurality of primary particles.

In an embodiment of the present disclosure, the primary particle of the large particle may have an average particle diameter of 100 nm to 500 nm, and the secondary particle may have an average particle diameter (D₅₀) of 8µm to 12µm, specifically 8µm to 11µm, and more specifically 9µm to 11µm.

In an embodiment of the present disclosure, the primary particle of the small particle may have an average particle diameter of 100 nm to 500 nm, and the secondary particle may have an average particle diameter(D₅₀) of 1µm to 5µm, specifically 2µm to 5µm, and more specifically 3µm to 5µm.

Further, since the positive electrode active material of the large particle and small particle has an average particle size (D₅₀) within the above range, the electrode density after pressing may be appropriately achieved, and the capacity characteristics of the battery can be improved.

In an embodiment, the roundness of the small particle may be 0.7 or more, specifically 0.7 to 0.8, and more specifically 0.7 to 0.75. When the roundness of the small particle satisfies the above range, the small particles can effectively fill the gaps between large particles to reduce porosity and increase electrode density.

In the present invention, the roundness of the large particle was measured by magnifying the sample surface by 1000 times using a scanning electron microscope (e.g., JSM-7200F, JEOL). The roundness of the small particles is measured by magnifying the sample surface by 2000 times using the same equipment.

In an embodiment, the true density of the positive electrode active material of the present disclosure may be 3.5 g/cc to 5.5 g/cc, specifically 3.5 g/cc to 5.3 g/cc, and more specifically 4 g/cc to 5 g/cc. If the true density of the positive electrode active material is 3.5 g/cc or more, it can exhibit high energy density, thereby improving the capacity and life of the battery. Further, if the true density of the positive electrode active material is 5.5 g/cc or less, it can exhibit an appropriate porosity within the electrode, thereby ensuring appropriate ionic conductivity.

The true density may be measured at room temperature and atmospheric pressure using a gas pycnometer.

In an embodiment, the porosity of the positive electrode active material may be 15% to 35%, specifically 18% to 35%, or more specifically 20% to 35%. When an electrode containing a positive electrode active material having a porosity within the above range is fabricated, the porosity within the electrode can be optimized to obtain a positive electrode with improved ionic conductivity and energy density. Consequently, the capacity and life of the battery are improved.

According to an embodiment of the present disclosure, the lithium- and manganese-rich oxide may be represented by the following Formula A.

[Formula A] Liₐ[Ni_{b}Co_{c}Mn_{d}Mₑ]O₂

wherein in Formula A, 1.0<a, 0≤b≤0.5, 0≤c≤0.1, 0.5≤d≤1.0, 0≤e≤0.2, and M is at least one selected from the group consisting of Al, B, W, Mg, V, Ti, Zn, Ga, In, Ru, Nb, Sn, Sr and Zr.

Meanwhile, a is the molar ratio of Li in the lithium- and manganese-rich oxide, and may be 1.0 < a, 1.1 ≤ a ≤ 1.5, or 1.12 < a < 1.18. When a satisfies the above range, high capacity characteristics and high energy density per unit volume may be achieved.

b is the molar ratio of Ni in the lithium- and manganese-rich oxide, and may be 0 ≤ b ≤ 0.5, 0.1 ≤ b ≤ 0.4, or 0.24 < b < 0.36.

c is the molar ratio of Co in the lithium- and manganese-rich oxide, and may be 0 ≤ c ≤ 0.1, 0 ≤ c ≤ 0.05, or 0 < c < 0.01. When c exceeds 0.1, it becomes difficult to secure high capacity, and evolution of gas and deterioration of the positive electrode active material become intensified, which may result in a decrease in life characteristics.

d is the molar ratio of Mn in the lithium- and manganese-rich oxide, and may be 0.5≤ d≤1.0, 0.5≤d≤0.8, or 0.5≤d<0.7. If d is less than 0.5, the proportion of the rock-salt phase is too low, and thus, the effect of improving the capacity is minimal.

e is the molar ratio of the additional element M in the lithium- and manganese-rich oxide, and may be 0≤e≤0.2, 0≤e≤0.1, or 0<e<0.05. When the content of the additional element is too high, it may adversely affect the capacity of the active material.

In yet another embodiment, the lithium- and manganese-rich oxide may have a layered crystal structure. Specifically, the lithium- and manganese-rich oxide may include a mixture of a compound having a layered crystal structure and a compound having a rock-salt crystal structure in a mixed state. An example of a compound having a layered crystal structure includes Li[Ni_{1-y-z-w}Mn_{y}Co_{z}M_{w}]O₂, and an example of a compound having a rock-salt crystal structure includes Li₂MnO₃. Therefore, the lithium- and manganese-rich oxide may be represented by the following Formula B.

[Formula B] X*Li₂MnO₃ · (1-X)*Li[Ni_{1-y-z-w}Mn_{y}Co_{z}M_{w}]O₂

wherein in Formula B, M is at least one selected from the group consisting of Al, B, W, Mg, V, Ti, Zn, Ga, In, Ru, Nb, Sn, Sr and Zr.

X is the ratio of the rock-salt phase (Li₂MnO₃) in the lithium- and manganese-rich oxide, and may be 0.2≤X≤0.5, 0.25≤X≤0.5, or 0.25≤X≤0.4. When the ratio of the rock-salt phase (Li₂MnO₃) in the lithium- and manganese-rich oxide satisfies the above range, high-capacity characteristics can be achieved.

y is the molar ratio of Mn in the layered phase (LiM'O₂), and may be 0.4≤y<1, 0.4≤y≤0.8, or 0.4≤y≤0.7.

z is the molar ratio of Co in the layered phase (LiM'O₂), and may be 0≤z≤0.1, 0≤z≤0.08, or 0≤z≤0.05. When z exceeds 0.1, evolution of gas and deterioration of the positive electrode active material become intensified, which may result in a decrease in life characteristics.

w is the molar ratio of the additional element M in the layered phase (LiM'O₂) and may be 0≤w≤0.2, 0≤w≤0.1, or 0≤w≤0.05.

The positive electrode active material of the above-described embodiments can be prepared in accordance with a general preparation method of lithium- and manganese-rich oxide. For example, each of the large-particle and small-particle positive electrode active materials can each be prepared by mixing a transition metal precursor containing manganese with a lithium raw material and then sintering the mixture. The types and preparation conditions of the precursor and the raw materials can follow the general preparation conditions for manganese-rich positive electrode active materials, and further descriptions thereof will thus be omitted.

However, as described above, in the preparation process, a large-particle positive electrode active material satisfying the roundness described above can be prepared by adjusting the concentration of ammonia (NH₃), stirring speed, pH level, additives, temperature, and the like, and the prepared large-particle positive electrode active material and small-particle positive electrode active material can be mixed at a prescribed ratio to obtain the positive electrode active material of an embodiment. The process conditions for preparing the positive electrode active material to achieve a prescribed roundness are well known to those skilled in the art, and further descriptions thereof will thus be omitted.

Meanwhile, in an embodiment of the present disclosure, a positive electrode comprising the above-described bimodal positive electrode active material composed of a mixture of a large particle and a small particle is provided. Such a positive electrode may include a positive electrode active material layer formed on one surface or both surfaces of a positive electrode current collector, and the positive electrode active material layer may be manufactured by mixing the positive electrode active material and optionally a binder, a conductive material, and the like in a solvent to form a positive electrode slurry and coating the positive electrode slurry onto the positive electrode current collector, followed by drying and pressing.

First, the positive electrode active material according to an embodiment may be included in an amount of 90% by weight to 99% by weight, 95% by weight to 99% by weight, or 97% by weight to 98% by weight, based on the total weight of the solids (e.g., positive electrode active material, conductive material, and binder) in the positive electrode slurry. If the content of the positive electrode active material in the solids is 90% by weight or less, the energy density may become low, and the capacity may be reduced.

Furthermore, the binder may be one or more selected from the group consisting of polyvinylidene fluoride (PVDF), polyvinylidene fluoride-co-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluorine rubber, or various copolymers thereof. Preferably, the binder may be polyvinylidene fluoride (PVDF).

The binder may be included in an amount of 0.5% by weight to 2.5% by weight, or 1 % by weight to 2% by weight, or 1.5% by weight to 2% by weight, based on the total weight of the solids in the positive electrode slurry. When the content of the binder is within the above range, sufficient adhesion to the current collector and bonding between particles are ensured, so that the initial resistance may be kept low while improving the durability of the positive electrode.

The conductive material may be one or more selected from the group consisting of graphite such as natural graphite or artificial graphite; carbon blacks such as acetylene black, Ketjen black, channel black, furnace black, lamp black, and thermal black; carbon-based mate rials such as carbon fibers or carbon nanotubes; metal powder or metal fiber such as copper, nickel, aluminum, and silver; conductive whiskers such as zinc oxide whiskers and potassium titanate whiskers; conductive metal oxides such as titanium oxide; or conductive polymers such as polyphenylene derivatives. Preferably, the conductive material may be carbon nanotubes or carbon black, most preferably carbon black.

According to an embodiment of the present disclosure, the positive electrode slurry may include a spherical conductive material, such as carbon black. The spherical conductive material effectively fills the fine gaps between active material particles, so that the target electrode density can be achieved even with a low press load, and the particles are distributed uniformly within the electrode, thereby exhibiting excellent electrical conductivity.

The conductive material may be included in an amount of 0.1% by weight to 2.5% by weight, 0.3% by weight to 2% by weight, or 0.5% by weight to 1% by weight, based on the total weight of the solids in the positive electrode slurry. When the content of the conductive material is within the above range, it is preferred in that it may reduce dead volume while maintaining conductivity between the active materials.

In addition, the positive electrode slurry may optionally further include a dispersant, wherein the dispersant may be hydrogenated nitrile butadiene rubber (HNBR).

Meanwhile, the solvent for the positive electrode slurry may be any solvent commonly used in the art, and for example, N-methylpyrrolidone (NMP), dimethyl sulfoxide (DMSO), isopropyl alcohol, dimethyl formamide (DMF), acetone, water, or a mixture of two or more thereof may be used. The solvent may be adjusted and used in an amount sufficient to achieve the viscosity of the above-described positive electrode slurry.

On the other hand, according to another embodiment of the present disclosure, a positive electrode comprising the above-described positive electrode active material is provided. Such a positive electrode may be fabricated from the positive electrode slurry, and may include, for example, a positive electrode current collector; and a positive electrode active material layer formed on the positive electrode current collector and including the positive electrode active material of one embodiment. In this case, the positive electrode active material layer is formed by processes such as coating, drying, and pressing of the above-described slurry, and may further include a binder and a conductive material.

The positive electrode current collector may contain a metal with high conductivity, and the positive electrode active material layer is easily adhered, but is not particularly limited as long as it has no reactivity within the voltage range of the battery. As the positive electrode current collector, for example, stainless steel, aluminum, nickel, titanium, sintered carbon, or aluminum or stainless steel of which surface is treated with carbon, nickel, titanium, silver, or the like may be used. The positive electrode current collector may generally have a thickness of 3 to 500 µm, and the positive electrode current collector may have fine protrusions and depressions formed on a surface thereof to enhance adherence of a positive electrode active material. For example, the positive electrode current collector may be used in various forms such as a film, a sheet, a foil, a net, a porous body, a foam body, and a non-woven fabric body.

The positive electrode can be fabricated in accordance with to a conventional positive electrode fabrication method except that the positive electrode active material of the above-mentioned embodiments is used. Specifically, the positive electrode may be fabricated by applying the positive electrode slurry on a positive electrode current collector, followed by drying and pressing, or alternatively, may be fabricated by casting the positive electrode slurry on a separate support and then laminating the film obtained by peeling from this support onto the positive electrode current collector.

In an embodiment, the roundness of the large particle may be 0.8 or more, specifically 0.8 or more and 1.0 or less, and more specifically 0.8 or more and 0.9 or more. When the positive electrode active material of the present disclosure is included, the press load during the electrode fabrication process can be reduced, thereby minimizing the cracking of the active material particles. As a result, the roundness of the large particle in the positive electrode active material powder state and the roundness of the large particle within the positive electrode after the pressing process can exhibit substantially the same range.

Further, according to an embodiment, the amount of fine particles in the positive electrode active material may be 15% by volume or less, specifically 0.1% by volume or more and 10% by volume or less, or more specifically 0.1% by volume or more and 8% by volume or less, of the total positive electrode active material. In this case, particles with a particle diameter of 1 *µ*m or less are defined as fine particles. Specifically, when pressing with a press load of 4 to 7 tons, 4.5 to 7 tons, or 4.5 to 6.5 tons in the electrode fabrication process, the amount of fine particles with a particle diameter of 1 *µ*m or less after pressing may be 5% by volume or less, specifically 0.1% by volume or more and 5% by volume or less, of the total positive electrode active material. The amount of fine particles in the positive electrode active material can be determined by measuring the volume cumulative particle size distribution of the powder obtained by crushing the high-temperature-treated positive electrode using a laser diffraction particle size measuring device (e.g., Malvern Mastersizer 3000) and then calculating the volume ratio of particles with a diameter of 1 *µ*m or less from the volume cumulative particle size distribution.

In another embodiment, the porosity of the positive electrode may be 15% to 35%, specifically 18% to 35%, and more specifically 20% to 35%. When the porosity of the positive electrode satisfies the above range, the positive electrode has excellent ionic conductivity and energy density, thereby improving the capacity and life characteristics of the battery.

According to an embodiment, the particle size D₁₀ of the positive electrode active material in the fabricated positive electrode may be 1.5 *µ*m to 4 *µ*m, specifically 1.5 *µ*m to 3.5 *µ*m, or more specifically 1.9 *µ*m to 3 *µ*m, D₅₀ may be 5 *µ*m to 8 *µ*m, specifically 6 *µ*m to 8 *µ*m, or more specifically 6.5 *µ*m to 8 *µ*m; and D₉₀ may be 11 *µ*m to 15 *µ*m, specifically 12 *µ*m to 15 *µ*m, or more specifically 12.5 *µ*m to 15 *µ*m.

In an embodiment, the particle diameter D₁₀ of the large particle in the fabricated positive electrode may be 5 *µ*m to 11 *µ*m, specifically 6 *µ*m to 10 *µ*m, and more specifically 6.5 *µ*m to 9.5 *µ*m, D₅₀ may be 6 *µ*m to 13 *µ*m, specifically 7 *µ*m to 12 *µ*m, and more specifically 7.5 *µ*m to 11.5 *µ*m, and D₉₀ may be 7 *µ*m to 14 *µ*m, specifically 8 *µ*m to 13 *µ*m, and more specifically 8.5 *µ*m to 12.5 *µ*m.

In yet another embodiment, the particle diameter D₁₀ of the small particle in the fabricated positive electrode may be 1 *µ*m to 5 *µ*m, specifically 1.5 *µ*m to 4.5 *µ*m, or more specifically 1.9 *µ*m to 4 *µ*m, D₅₀ may be 3 *µ*m to 8 *µ*m, specifically 3.5 *µ*m to 7.5 *µ*m, or more specifically 3.5 *µ*m to 7 *µ*m, and D₉₀ may be 4 *µ*m to 9 *µ*m, specifically 4.5 *µ*m to 8.5 *µ*m, and more specifically 5 *µ*m to 8 *µ*m.

When the particle diameters of the large and small particles in the positive electrode each satisfy the above ranges, high ionic conductivity and energy density can be achieved simultaneously, thereby improving the capacity and life characteristics of the battery.

On the other hand, according to yet another embodiment of the present disclosure, a lithium secondary battery comprising the above-mentioned positive electrode is provided. Such a lithium secondary battery may include, for example, the above-described positive electrode, a negative electrode facing the positive electrode, and a separator or an electrolyte layer interposed between the positive electrode and the negative electrode, and optionally, an electrolyte. In this case, since the positive electrode is the same as the contents described above, a detailed description thereof will be omitted, and only the remaining components will be described in detail below.

In the lithium secondary battery, the negative electrode includes a negative electrode current collector and a negative electrode active material layer located on one surface or both surfaces of the negative electrode current collector.

The negative electrode current collector is not particularly limited as long as it has high conductivity without causing any chemical change in the battery, and for example, copper, stainless steel, aluminum, nickel, titanium, sintered carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode current collector, microscopic irregularities may be formed on the surface of the current collector to improve the adhesion of the negative electrode active material. The negative electrode current collector, for example, may be used in various shapes such as a film, a sheet, a foil, a net, a porous body, a foam body, and a non-woven fabric body.

The negative electrode active material layer optionally includes a binder and a conductive material in addition to the negative electrode active material.

A compound capable of reversible intercalation and deintercalation of lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiO_{β} (0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Additionally, a metallic lithium thin film may be used as the negative electrode active material. The negative electrode active material may be included in an amount of 80% by weight to 99% by weight based on the total weight of the negative electrode active material layer.

The binder is a component that assists in the bonding between the conductive material, the active material and the current collector. Typically, the binder may be added in an amount of 0.1% by weight to 10% by weight based on the total weight of the negative electrode active material layer. Examples of the binder may include polyvinylidene fluoride (PVDF), polyvinyl alcohol, carboxymethylcellulose(CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber, a fluorine rubber, or various copolymers thereof.

The conductive material is a component for further improving the conductivity of the negative electrode active material. The conductive material may be added in an amount of 10% by weight or less, preferably 5% by weight or less, based on the total weight of the negative electrode active material layer. Such a conductive material is not particularly limited as long as it has conductivity without causing any chemical change in the battery, and, for example, for example, graphite such as natural graphite or artificial graphite; carbon black such as acetylene black, Ketjen black, channel black, furnace black, lamp black, or thermal black; conductive fibers such as carbon fibers or metal fibers; carbon fluoride; metal powders such as aluminum and nickel powders; conductive whiskers such as zinc oxide whiskers and potassium titanate whiskers; conductive metal oxide such as titanium oxide; a conductive material such as polyphenylene derivatives, and the like may be used.

The negative electrode active material layer may be prepared by coating, on a negative electrode current collector, a negative electrode slurry, which is prepared by dissolving or dispersing a negative electrode active material and optionally a binder and a conductive material in a solvent, and then drying the coated current collector, or by casting the negative electrode slurry on a separate support and then laminating a film obtained peeling from the support onto the negative electrode current collector.

On the other hand, in the lithium secondary battery, a separator is to separate the negative electrode and the positive electrode and to provide a movement path for lithium ions. Any separator may be used without particular limitation as long as it is typically used as a separator in a lithium secondary battery. In particular, a separator having high moisture-retention ability for an electrolyte as well as low resistance to the movement of electrolyte ions is preferable. Specifically, a porous polymer film, for example, a porous polymer film produced using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

In addition, the separator may be an SRS separator having a structure in which an organic-inorganic mixed layer containing inorganic particles and a binding material is formed on one surface or both surfaces of a polymer substrate.

Meanwhile, the lithium secondary battery may include the separator, but may also include an electrolyte layer separately from the separator, or may include a stack in which the electrolyte layer is stacked on the separator. In specific examples, the electrolyte layer may be a gel electrolyte layer including a gel electrolyte, or a solid electrolyte layer.

In a more specific example, the electrolyte layer including the gel electrolyte includes a matrix containing, for example, a polyurethane-based or polyacrylic-based crosslinked polymer, a lithium salt, and a non-aqueous organic solvent, and may have a form in which the lithium salt and the non-aqueous organic solvent are dispersed or encapsulated in the matrix. However, the types of crosslinked polymers, lithium salts, and organic solvents that may be included in the gel electrolyte are readily obvious to those skilled in the art, and further descriptions thereof will thus be omitted.

Additionally, in another specific example, the solid electrolyte layer may include any solid electrolyte, for example. one or more selected from the group consisting of a polymer-based solid electrolyte, an oxide-based solid electrolyte, a sulfide-based solid electrolyte, and a halogenated solid electrolyte. However, the composition and the like of such a solid electrolyte layer can follow those of conventional solid electrolyte layers which had been known, and further descriptions thereof will thus be omitted.

On the other hand, the above-described lithium secondary battery may further include an electrolyte containing a lithium salt and a non-aqueous organic solvent.

The non-aqueous organic solvent may be used without particular limitation as long as it can serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate(DMC), diethyl carbonate(DEC), methylethyl carbonate(MEC), ethylmethyl carbonate(EMC), ethylene carbonate(EC), and propylene carbonate (PC); an alcohol-based solvent such as ethyl alcohol and isopropyl alcohol; nitriles such as R-CN (where R is a linear, branched, or cyclic hydrocarbon group having 2 to 20 carbon atoms, and may include a double-bond aromatic ring or ether bond); amides such as dimethylformamide; dioxolanes such as 1,3-dioxolane; sulfolane, or the like can be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity which may increase charging/discharging performance of the battery (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻. As the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)_{2.}LiCl, LiI, LiB(C₂O₄)₂ or the like may be used. The lithium salt may be used in a concentration range of 0.1M to 4.0M. In a case in which the concentration of the lithium salt is included within the above range, the electrolyte may have appropriate conductivity and viscosity and thus may exhibit excellent performance, and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 to 5% by weight based on a total weight of the electrolyte.

Since the above-described above lithium secondary battery stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

The type of the lithium secondary battery may be, but is not particularly limited to, a cylindrical type using a can, a prismatic type, a pouch type, a coin type, or the like.

The lithium secondary battery according to the present invention may be used not only in a battery cell used as a power source of a small device but also as a unit battery in medium-to-large-sized battery modules including a plurality of battery cells.

Examples of the medium-to-large-sized device include, but are not limited to, an electric vehicle, a hybrid electric vehicle, a plug-in hybrid electric vehicle, a power storage system, and the like.

In the present disclosure, the positive electrode, lithium secondary battery, and the like can be fabricated using materials or methods known in this technical field.

Hereinafter, the present disclosure will be described in detail with reference to specific examples.

### <Preparation of Positive Electrode Active Material>

### (1) Preparation of large and small particle positive electrode active materials

The large-particle positive electrode active materials 1 to 6 and the small-particle positive electrode active materials a to fused in the following Preparation Examples, Examples, and Comparative Examples each have the characteristics shown in Tables 1 and 2 below.

**[Table 1]**

| Sample | Composition (ICP) | Average diameter (D₅₀) | Roundness of large particle (r) |
|---|---|---|---|
| 1 | Li_{1.14}Mn_{0.55}Ni_{0.31}O₂ | 9.34 | 0.877 |
| 2 | Li_{1.16}Mn_{0.54}Ni_{0.30}O₂ | 9.3 | 0.80 |
| 3 | Li_{1.16}Mn_{0.54}Ni_{0.30}O₂ | 9.33 | 0.846 |
| 4 | Li_{1.16}Mn_{0.54}Ni_{0.30}O₂ | 9.31 | 0.819 |
| 5 | Li_{1.15}Mn_{0.55}Ni_{0.30}O₂ | 10.2 | 0.80 |
| 6 | Li_{1.15}Mn_{0.55}Ni_{0.30}O₂ | 10.4 | 0.717 |

**[Table 2]**

| Sample | Composition (ICP) | Average diameter (D₅₀) | Roundness of small particle |
|---|---|---|---|
| a | Li_{1.14}Mn_{0.55}Ni_{0.31}O₂ | 3.68 | 0.734 |
| b | Li_{1.16}Mn_{0.54}Ni_{0.30}O₂ | 3.61 | 0.730 |
| c | Li_{1.16}Mn_{0.54}Ni_{0.30}O₂ | 3.62 | 0.736 |
| d | Li_{1.15}Mn_{0.54}Ni_{0.31}O₂ | 3.58 | 0.744 |
| e | Li_{1.15}Mn_{0.55}Ni_{0.30}O₂ | 2.8 | 0.730 |
| f | Li_{1.15}Mn_{0.55}Ni_{0.30}O₂ | 2.9 | Unmeasurable |

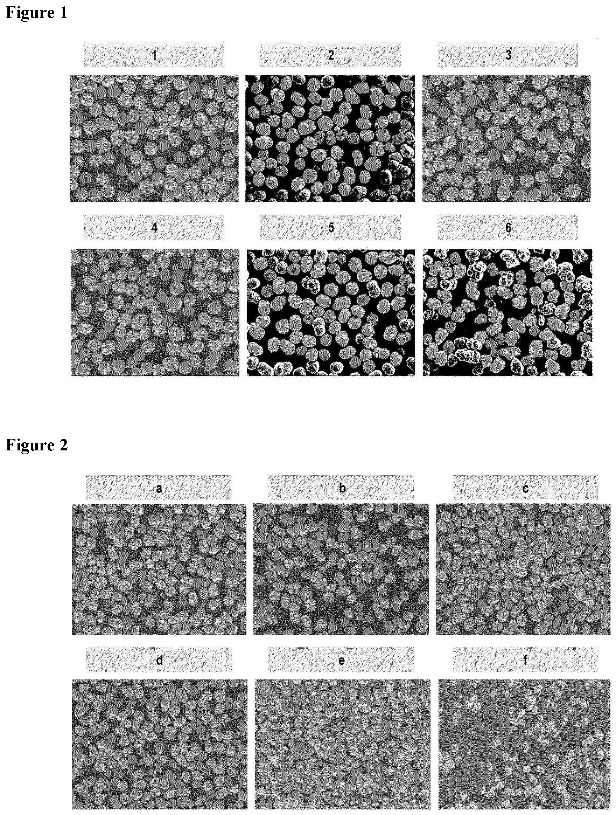

In Tables 1 and 2 above, the average particle diameter (D₅₀) and roundness were measured by uniformly coating the powder groups of Samples 1 to 6 and Samples a to f on carbon tape, taking photographs of the powder particles using a scanning electron microscope (JEOL JSM-7200F), and then performing IAM analysis on the photographs. However, the powder group of Sample f had a very irregular particle morphology, making it difficult to identify the morphology of the small particles from the photograph, and the roundness could not be measured and was thus listed as "unmeasurable" in Table 2. Photographs of each sample are shown in Figures 1 and 2.

### (2) Preparation of Positive Electrode Active Materials of Examples and Comparative Examples

As shown in Table 3 below, large and small particle samples were mixed in a weight ratio of 65:35 to prepare the positive electrode active materials of Examples 1 to 5 and Comparative Example 1.

Further, each of the powder groups prepared in Examples and Comparative Examples was placed in a cylindrical mold, the true density (g/cc) of each sample was used to calculate the target density (actual density) for achieving a porosity of approximately 30%, and then, the pressing thickness for achieving a porosity of approximately 30% (target porosity) was set by using the target density, sample mass, and bottom surface area of the cylindrical mold. The press load measured by pressing up to the set pressing thickness is shown in Table 3 below. $Porosity = \left\{\left(True Density-Actual Density\right)/True Density\right\} \times 100$ $Target Density \left(Actual Density\right) = True Density \times \left\{\left(100-Target Porosity\right)/100\right\}$ 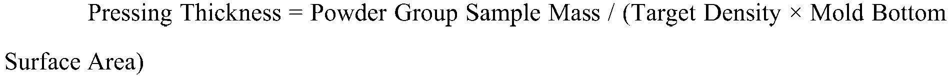 Pressing Thickness = Powder Group Sample Mass / (Target Density × Mold Bottom Surface Area)

**[Table 3]**

| Experimental Example | Mixing | P (ton) |
|---|---|---|
| Example 1 | Sample 1 + Sample a | 4.7 |
| Example 2 | Sample 2 + Sample b | 5.4 |
| Example 3 | Sample 3 + Sample c | 6 |
| Example 4 | Sample 4 + Sample d | 6.4 |
| Example 5 | Sample 5 + Sample e | 5.9 |
| Comparative Example 1 | Sample 6 + Sample f | 7.4 |

From Table 3 above, it can be confirmed that in the case of Examples of the present disclosure, the press load for achieving the same porosity is lower than that in Comparative Example 1.

### <Fabrication of Positive Electrode and Lithium Secondary Battery>

The positive electrode active material of Example 1, KF9700 (Kureha) as a binder, Li435 (Denka) as a conductive material, and BM-740H (Zeon) as a dispersant were mixed in a weight ratio of 96.25:2.1:1.5:0.15 in N-methylpyrrolidone to prepare a positive electrode slurry. The positive electrode slurry was coated onto an aluminum current collector sheet, dried, and then pressed under a press load of 4.7 tons to thereby fabricate a positive electrode.

A positive electrode active material composed of a mixture of natural graphite and artificial graphite in a 5:5 weight ratio, a conductive material and a binder were mixed to prepare a negative electrode slurry. The negative electrode slurry was coated onto a copper current collector sheet, dried, and then pressed to thereby fabricate a negative electrode.

An SRS separator was interposed between the positive electrode and the negative electrode fabricated as above to prepare an electrode assembly. The electrode assembly was inserted into a battery case, an electrolyte was injected thereto, and the activation process was performed by charging with a constant current of 0.1 C at 45°C until the voltage reached 4.6V and then discharging with a constant current of 0.1 C until the voltage reached 2.0 V to thereby fabricate a lithium secondary battery.

In addition, a lithium secondary battery was fabricated in the same manner as described above, except that the positive electrode active materials of Examples 2 to 5 and Comparative Example 1 were used and pressing was performed under the press load listed in Table 3.

### Experimental Example 1. Measurement of Porosity of Positive Electrode

Cross sections of the positive electrodes containing the positive electrode active materials of Examples 1 to 5 and Comparative Example 1 were photographed at a magnification of 1,000 times using a scanning electron microscope (JEOL JSM-7200F) and analyzed. As a result, the positive electrodes all had a porosity of approximately 30%, which exhibited similar electrode densities. From this, it can be confirmed that in the case of Examples of the present disclosure, the press load required to achieve the same electrode density range is lower than that in Comparative Example 1.

### Experimental Example 2: Evaluation of Volume Cumulative Particle Size Distribution and Particle Crack Rate of Positive Electrode

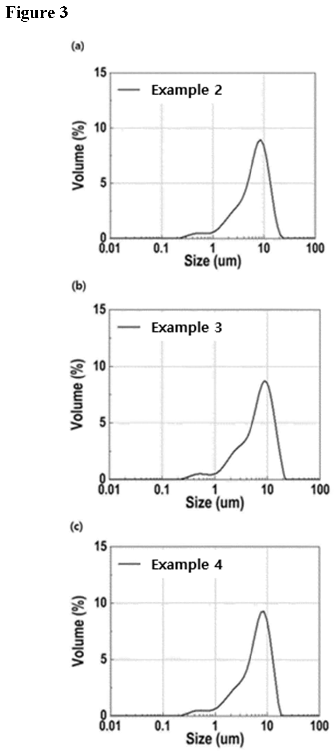

The positive electrodes comprising the positive electrode active material of Example 2, Example 3, or Example 4 were heat-treated in a furnace at a temperature of 700°C for 10 hours to recover a positive electrode active material. The positive electrode active material was finely crushed using a mortar and pestle, and then classified using a 250-mesh sieve to obtain a positive electrode active material powder contained in each positive electrode. The resulting powder was analyzed using Mastersizer 3000 (Malvern) to obtain a volume cumulative particle size distribution (PSD). The volume cumulative particle size distributions of the positive electrode active materials are shown in Figure 3, respectively.

From this, the Dn value and pressing limit of each powder, and volume ratio of particles with a particle diameter of 1 µm or less among the positive electrode active materials contained in the positive electrode were evaluated, and the results are shown in Table 4 below.

**[Table 4]**

| Experimental Example | | Example 2 | Example 3 | Example 4 |
|---|---|---|---|---|
| Dn (µm) | D10 | 2.07 | 2.05 | 1.94 |
| | D50 | 7.22 | 7.47 | 6.93 |
| | D90 | 13.6 | 14.1 | 12.6 |
| Fine particle amount (%) | | 4.4 | 4.5 | 4.8 |
| Pressing limit (%) | | 28.6 | 28.8 | 29.3 |

From Figure 3 and Table 4, it can be confirmed that as the press load is lower, the fine particle amount and the pressing limit are smaller. Based on this, it is expected that Comparative Example 1 generates more fine particles and exhibit a higher pressing limit than in Example 4. Furthermore, it is expected that batteries with high energy density and superior performance can be manufactured by applying the positive electrode active material of the present disclosure.

### Experimental Example 3: Evaluation of Life Characteristics

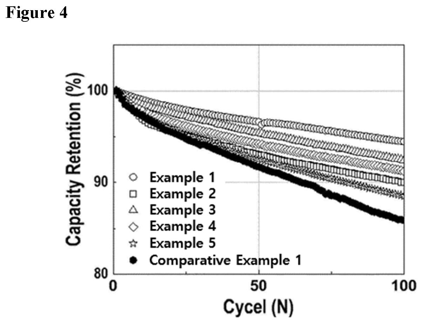

A total of six lithium secondary batteries fabricated by using the positive electrode active materials of Examples 1 to 5 and Comparative Example 1 were subjected to 100 cycles of charge/discharge tests at 45°C and voltage of 2.0V~4.35V in the conditions of 0.3C/0C. During such charge-discharge cycles, the capacity retentions were evaluated, and the results are shown in Figure 4.

Referring to Figure 4, it was confirmed that the lithium secondary batteries of Examples 1 to 5 has higher capacity retentions and thus exhibits superior life characteristics after 100 cycles of charge/discharge tests, than in Comparative Example 1. This is considered to be an effect resulting from a decrease in the amount of fine particles generated during the pressing process.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

## Claims

1. A bimodal positive electrode active material composed of a mixture of a large particle and a small particle,
wherein the large particle is a lithium- and manganese-rich oxide in which a molar ratio of lithium to all transition metals excluding lithium is more than 1 and a molar content of manganese in the transition metals is 50 mol% or more, and
wherein a roundness of the large particle is 0.8 or more.

2. The positive electrode active material of claim 1,
wherein the small particle is a lithium- and manganese-rich oxide.

3. The positive electrode active material of claim 1,
wherein the large particle is included in an amount of more than 50% by weight based on the total weight of the positive electrode active material.

4. The positive electrode active material of claim 1,
wherein an average particle diameter (D₅₀) of the large particle is 8µm to 12µm.

5. The positive electrode active material of claim 1,
wherein an average particle diameter (D₅₀) of the small particle is 1µm to 5µm.

6. The positive electrode active material of claim 1,
wherein a roundness of the small particle is 0.7 or more.

7. The positive electrode active material of claim 1,
wherein a true density of the positive electrode active material is 3.5 g/cc to 5.5 g/cc.

8. The positive electrode active material of claim 1,
wherein a porosity of the positive electrode active material is 15% to 35%.

9. The positive electrode active material of claim 1,
wherein the lithium- and manganese-rich oxide is represented by the following Formula A:
[Formula A] Liₐ[Ni_{b}Co_{c}Mn_{d}Mₑ]O₂
wherein in Formula A, 1.0<a, 0≤b≤0.5, 0≤c≤0.1, 0.5≤d≤1.0, 0≤e≤0.2, and M is at least one selected from the group consisting of Al, B, W, Mg, V, Ti, Zn, Ga, In, Ru, Nb, Sn, Sr and Zr.

10. The positive electrode active material of claim 1,
wherein the lithium- and manganese-rich oxide comprises a layered crystal structure.

11. A positive electrode comprising the bimodal positive electrode active material composed of a mixture of a large particle and a small particle as set forth in any one of claims 1 to 10.

12. The positive electrode of claim 11,
wherein a roundness of the large particle is 0.8 or more.

13. The positive electrode of claim 11,
wherein the amount of fine particles in the positive electrode active material is 15% by volume or less of the total positive electrode active material.

14. The positive electrode of claim 11,
wherein a porosity of the positive electrode is 15% to 35%.

15. The positive electrode of claim 11,
wherein a particle diameter D₁₀ of the positive electrode active material is 1.5µm to 4µm, D₅₀ is 5µm to 8µm, and D₉₀ is 11µm to 15µm.

16. The positive electrode of claim 11,
wherein the positive electrode comprises a spherical conductive material.

17. A lithium secondary battery comprising
the positive electrode as set forth in claim 11;
a negative electrode facing the positive electrode; and
a separator or an electrolyte layer interposed between the positive electrode and the negative electrode.

18. The lithium secondary battery of claim 17,
further comprising an electrolyte including a lithium salt and a non-aqueous organic solvent.
